# EUROPEAN PATENT SPECIFICATION

(11) **EP 2 507 698 B1**
(45) Date of publication and mention of the grant of the patent: **02.09.2020**
(21) Application number: 10834961.4
(22) Date of filing: 23.11.2010
(51) Int. Cl.: G06F 3/048, G06F 3/041, G06F 3/038, G06F 3/16, G06F 3/0488, G06F 3/0486

(54) **THREE-STATE TOUCH INPUT SYSTEM**
BERÜHRUNGSEINGABESYSTEM MIT DREI MODI
SYSTÈME D'ENTRÉE TACTILE À TROIS ÉTATS

(30) Priority: 03.12.2009 US 630381
(43) Date of publication of application: 10.10.2012
(73) Proprietor: Microsoft Technology Licensing, LLC, Redmond, WA 98052 (US)
(72) Inventor: WIGDOR, Daniel John, Redmond, Washington 98052-6399 (US); LOMBARDO, Jarrod, Redmond, Washington 98052-6399 (US); PERKINS, Annuska Zolyomi, Redmond, Washington 98052-6399 (US); HAYES, Sean, Redmond, Washington 98052-6399 (US)
(74) Representative: Goddar, Heinz J.
(86) International application number: PCT/US2010/057701
(87) International publication number: WO 2011/068713

(56) References cited:
- WO-A1-2007/037809
- WO-A2-2006/020305
- KR-A- 20080 107 547
- US-A- 5 825 352
- US-A1- 2001 011 995
- US-A1- 2003 234 824
- US-A1- 2006 095 848
- US-A1- 2008 129 520
- US-A1- 2008 168 403
- US-A1- 2009 122 018
- US-A1- 2009 166 098
- US-A1- 2010 313 125

## Description

### BACKGROUND

Touch-sensitive display screens have become increasingly common as an alternative to traditional keyboards and other human-machine interfaces ("HMI") to receive data entry or other input from a user. Touch screens are used in a variety of devices including both portable and fixed location devices. Portable devices with touch screens commonly include, for example, mobile phones, personal digital assistants ("PDAs"), and personal media players that play music and video. Devices fixed in location that use touch screens commonly include, for example, those used in vehicles, point-of-sale ("POS") terminals, and equipment used in medical and industrial applications.

The ability to directly touch and manipulate data on a touch-screen has a strong appeal to users. In many respects, touch-screens can be used as a more advantageous input mechanism than the traditional mouse. When using a touch-screen, a user can simply tap the screen directly on the graphical user interface element (e.g., a icon) they wish to select rather than having to position a cursor over the user interface with a mouse.

Touch screens can serve both to display output from the computing device to the user and receive input from the user. The user's input options may be displayed, for example, as control, navigation, or object icons on the screen. When the user selects an input option by touching the associated icon on the screen with a stylus or finger, the computing device senses the location of the touch and sends a message to the application or utility that presented the icon.

Devices with touch screen based user interfaces known in the prior art are disclosed by documents US 2008/129520, US 2010/313125.

### SUMMARY OF THE INVENTION

Conventional touch screen input devices can be problematic for visually impaired users because they are not able to visually judge the alignment of their finger or stylus with the desired graphical user interface element appearing on the screen prior to contacting it. In addition, they do not have a means to verify the impact of touching the screen prior making contact with it, by which time the underlying application will have already acted in response to that contact.

To overcome this limitation, in one implementation a touch screen display system for use in an electronic device is provided, comprising: a touch screen configured to receive user input and display one or more graphical user interface elements; an audio preview component configured to enter, in response to receipt of a first touch and continued receipt of the first touch on the touch screen, a first state that enables an audio cue indicating a function that can be performed by the graphical user interface element, receive, while in the first state, an indication that the first touch is at the location of the graphical user interface element, and based at least on the indication that the first touch is at the location of the graphical user interface element, provide the audio cue that indicates the information associated with the graphical user interface element; and a touch screen controller configured to enter, in response to receipt of a second touch on the touch screen while continuing to receive the first touch, a second state that includes activating the associated graphical user interface element; and an application residing on the electronic device, the application having a user interface that includes the graphical user interface element, and wherein the audio preview component includes a text-to-speech converter component for converting text associated with the graphical user interface element into the audio cue, said text being exposed to the audio preview component by the application, wherein the second state allows the graphical user interface element to be dragged on the touch screen in response to movement of the first touch along the touch screen.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 shows an illustrative portable computing environment in which a user interacts with a device using a touch screen for receiving user inputs.
FIG. 2 shows various illustrative form factors of a computing device in which a touch screen may be employed.
FIG. 3 shows the state diagram for a conventional mouse input device.
FIG. 4 shows the state diagram for a conventional touch screen input device.
FIG. 5 shows one example of a state diagram for a 3-state touch screen input device.
FIG. 6 shows a user's finger touching a touch screen that presents a menu of options.
FIG. 7 shows the user's finger in FIG. 6 touching the option labeled "Scatter View."
FIG. 8 shows a finger touching the touch screen shown in FIGs. 6-7, which causes a circle to be presented on the touch screen centered about the location where the finger makes contact with the screen.
FIG. 9 shows a second finger touching the touch screen shown in FIG. 8 in order to activate the selected graphical user interface element.
FIG. 10 is an illustrative architecture that shows the functional components that may be installed on a computing device that employs a touch screen for receiving user inputs.

### DETAILED DESCRIPTION

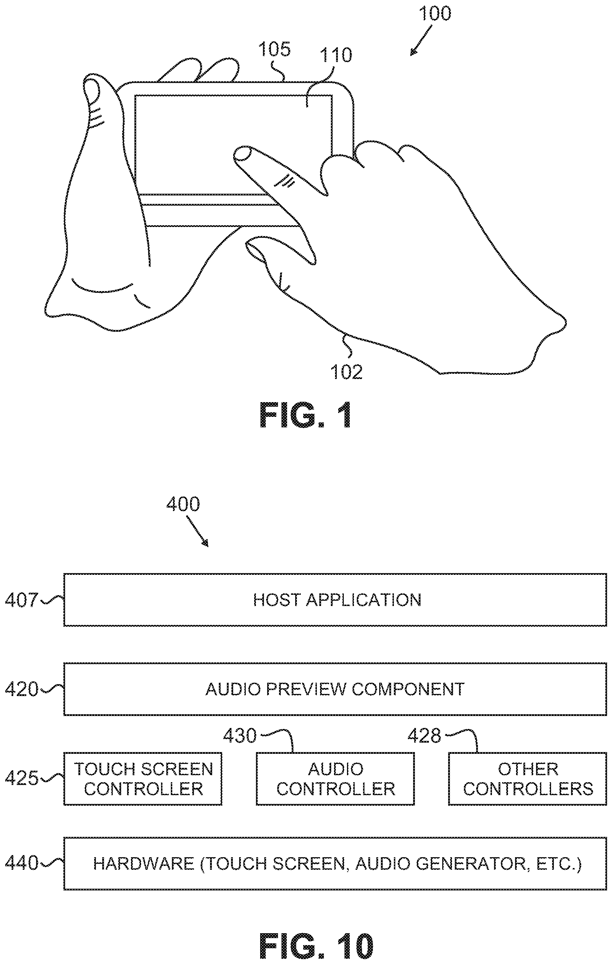

FIG. 1 shows an illustrative portable computing environment 100 in which a user 102 interacts with a device 105 using a touch screen 110 for receiving user inputs. Device 105, as shown in FIG. 1, is commonly configured as a portable computing platform or information appliance such as a mobile phone, smart phone, PDA, ultra-mobile PC (personal computer), handheld game device, personal media player, and the like. Typically, the touch screen 110 is made up of a touch-sensor component that is constructed over a display component. The display component displays images in a manner similar to that of a typical monitor on a PC or laptop computer. In many applications, the device 105 will use a liquid crystal display ("LCD") due to its light weight, thinness, and low cost. However, in alternative applications, other conventional display technologies may be utilized including, for example, cathode ray tubes ("CRTs"), plasma-screens, and electro-luminescent screens.

The touch sensor component sits on top of the display component. The touch sensor is transparent so that the display may be seen through it. Many different types of touch sensor technologies are known and may be applied as appropriate to meet the needs of a particular implementation. These include resistive, capacitive, near field, optical imaging, strain gauge, dispersive signal, acoustic pulse recognition, infrared, and surface acoustic wave technologies, among others. Some current touch screens can discriminate among multiple, simultaneous touch points and/or are pressure-sensitive. Interaction with the touch screen 110 is typically accomplished using fingers or thumbs, or for non-capacitive type touch sensors, a stylus may also be used.

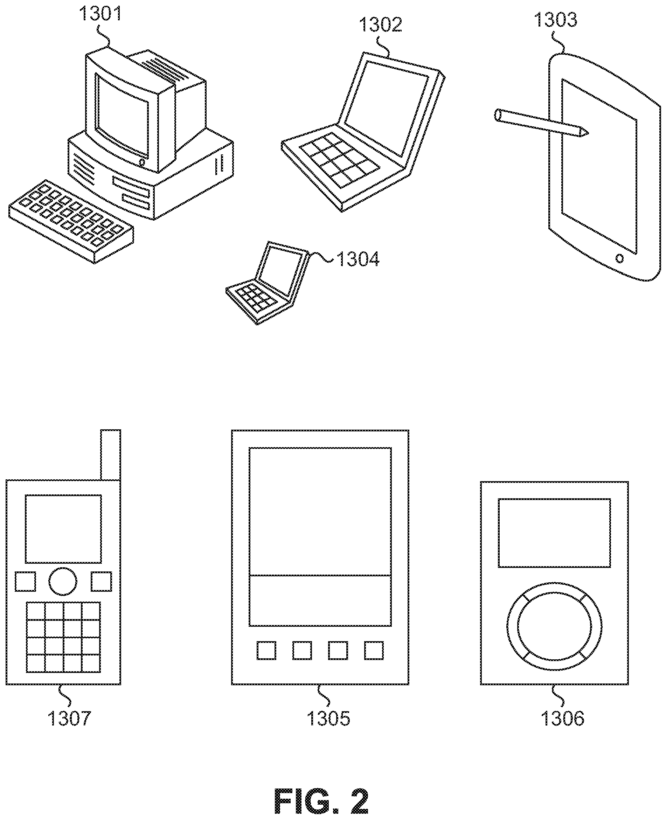

Other illustrative form factors in which the computing device may employed are shown in FIG. 2, including desktop computers 1301, notebook computers 1302, tablet computers 1303, handheld computers 1304, personal digital assistants 1305, media players 1306, mobile telephones 1307, and the like. Additionally, the computer may be a combination of these types, for example, a device that is a combination of a personal digital assistant, media player, and mobile telephone.

While many of the form-factors shown in FIGs. 1 and 2 are portable, the present arrangement may also be used in any fixed computing device where touch screens are employed. These devices include, for example, automatic teller machines ("ATMs"), point-of-sale ("POS") terminals, or self-service kiosks and the like such as those used by airlines, banks, restaurants, and retail establishments to enable users to make inquiries, perform self-served check-outs, or complete other types of transactions. Industrial, medical, and other applications are also contemplated where touch screens are used, for example, to control machines or equipment, place orders, manage inventory, etc. Touch screens are also becoming more common in automobiles to control subsystems such as heating, ventilation and air conditioning ("HVAC"), entertainment, and navigation. The new surface computer products, notably Microsoft Surface™ by Microsoft Corporation, may also be adaptable for use with the present input device.

In order to facilitate an understanding of the methods, techniques and systems described herein, it may be helpful to compare the operation of a conventional mouse with a conventional touch screen input device using state diagrams to model their functionality.

First, when a mouse is out of its tracking range (such as occurs when a mechanical mouse is lifted off a surface), the mouse is in a state 0 that may be referred to as out-of-range. Next, consider a mouse that is within its tracking range but without any of its buttons being depressed. This state may be referred to as tracking, which describes a state in which a cursor or pointer appearing on the screen follows the motion of the mouse. The tracking state may be referred to as state 1. In the tracking state the cursor or pointer can be positioned over any desired graphical user interface element by moving the mouse. The mouse can also operate in a second state (referred to as state 2) when a button is depressed. In this state, which can be referred to as dragging, graphical user interface elements or objects are moved ("dragged") on the display so that they follow the motion of the mouse. It should be noted that the act of selecting an icon may be considered a substate of the dragging state since selecting involves depressing and releasing a button.

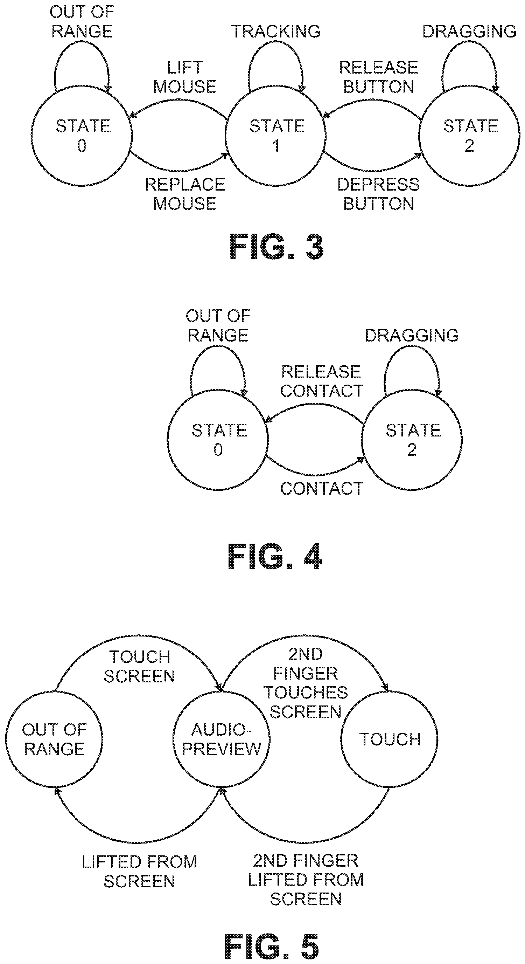

FIG. 3 shows the state diagram for the mouse described above. In state 0 the mouse is out of range and in state 1 it is in the tracking state. The mouse can enter the state 1 from state 0 by bringing it back into range. In the case of a mechanical mouse, this involves returning the mouse to a surface such as a mouse pad. The mouse can enter state 2 from state 1 by depressing ("clicking") a button. The mouse can also return to state 1 from state 2 by releasing the button.

FIG. 4 shows the state diagram for a conventional touch screen input device, which is assumed to be only capable of sensing one bit of pressure, namely touch or no-touch. While a mouse has three states, the touch screen input device only has two states, which correspond to the state 0 (out-of-range) and the state 2 (dragging). That is, the conventional touch screen input device does not have a tracking state.

The lack of a tracking state in a conventional touch screen input device can be overcome by sighted users because they are able to visually judge the alignment of their finger or stylus with the desired graphical user interface element appearing on the screen prior to contacting it. Visually impaired users, however, do not have a means to verify the impact of touching the screen prior making contact with it, by which time the underlying application will have already acted in response to that contact.

To overcome this limitation, a touch screen input device is provided which simulates a 3-state input device such as a mouse. The additional state is used to preview the effect of entering state 2 when the screen is touched. In this preview state touching a graphical user interface element on the screen does not cause the action associated with that element to be performed. Rather, when the screen is touched while in the preview state audio cues are provided to the user indicating what action would arise if the touch screen input device were to be in state 2.

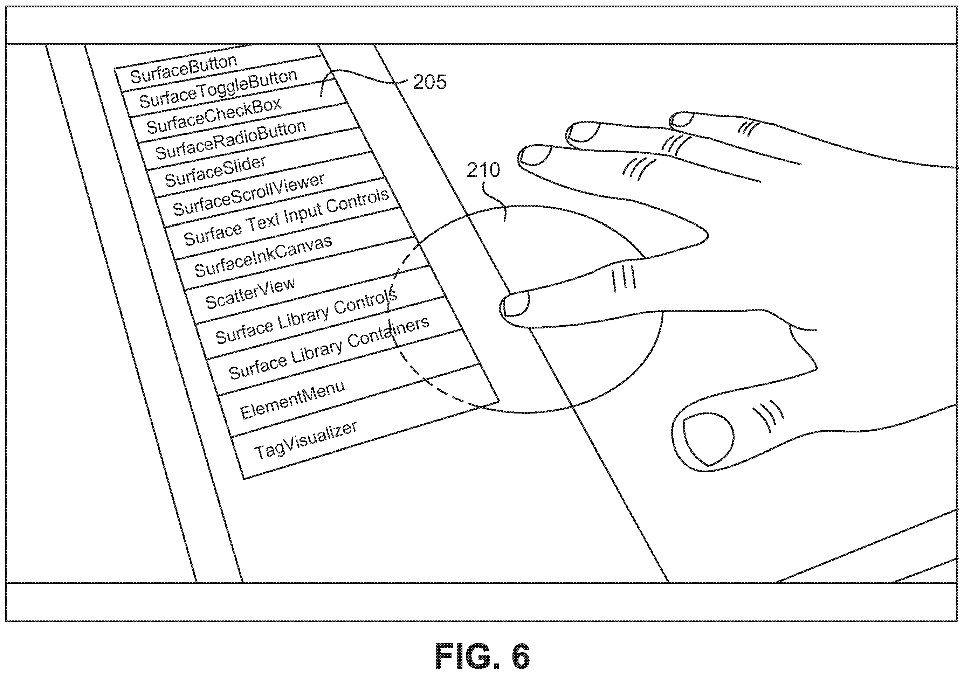

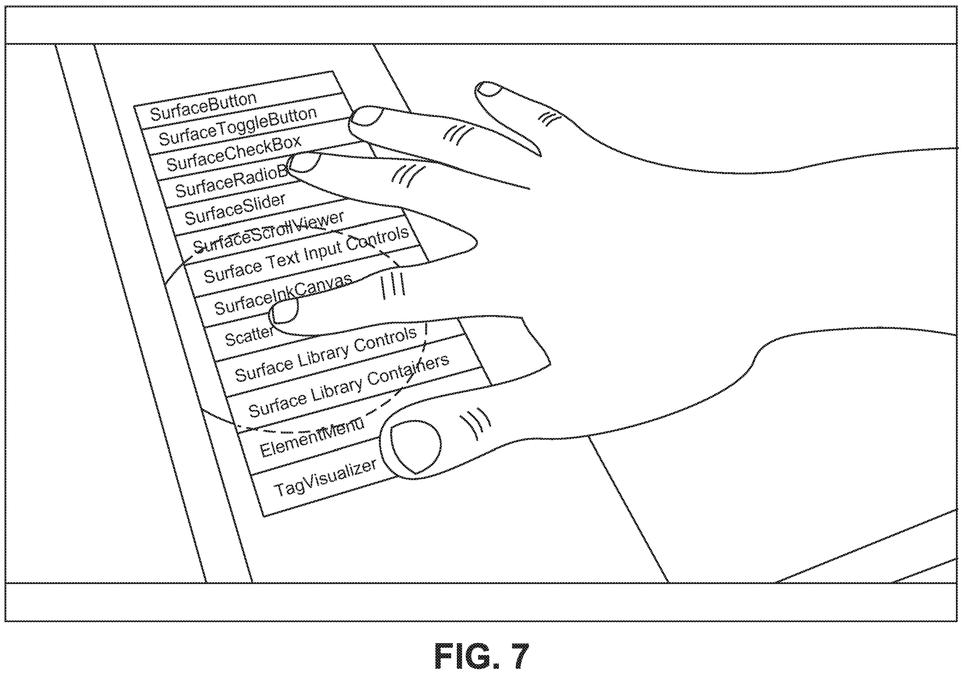

FIG. 5 shows one example of a state diagram for the 3-state touch screen input device. States 0 and 2 correspond to states 0 and 2 shown in FIG. 4. It should be noted, however, that for the sake of generality state 2 in FIG. 5 is referred to as the touch state, which may include actions such as dragging and selecting the graphical user interface element that is being touched. For instance, the second state may allow a graphical user interface element to be dragged on the touch screen in response to movement of the first touch along the touch screen. In addition to these two states, a new state, state 1, is also provided, which in some implementations may be referred to as an audio-preview state. The audio preview state may be entered from the out-of-range state (state 0) by touching the screen with a single finger or stylus. As various graphical user interface elements are contacted while in this state an audio cue is provided describing the function of the element that is being contacted. For example, as shown in FIG. 6, a user's finger is received by a touch screen that is used with the Microsoft Surface™ computer product. The finger is touching a screen that presents a menu 205 of options. As result of receipt of the finger on the touch screen, a circle 210 is generated on the touch screen. In FIG. 7 the finger touches the option labeled "Scatter View." In response to the touch, an audio cue is generated that says "Scatter View."

Once the user has located a graphical user interface element that he or she desires to select, the user can enter state 2 by placing a second finger or stylus on the touch screen while the first finger or stylus maintains contact with the element. In this way the desired graphical user interface element can be activated. That is, placing the touch screen in the second state by making contact with a second finger or stylus causes the underlying application to respond as it would when that element is selected using a conventional input device.

As indicated in FIG. 5, the user may exit the second state by lifting the second finger or stylus from the touch screen, which returns the screen to the audio preview state. That is, detecting the absence of the second finger or stylus returns the screen to the audio preview state.

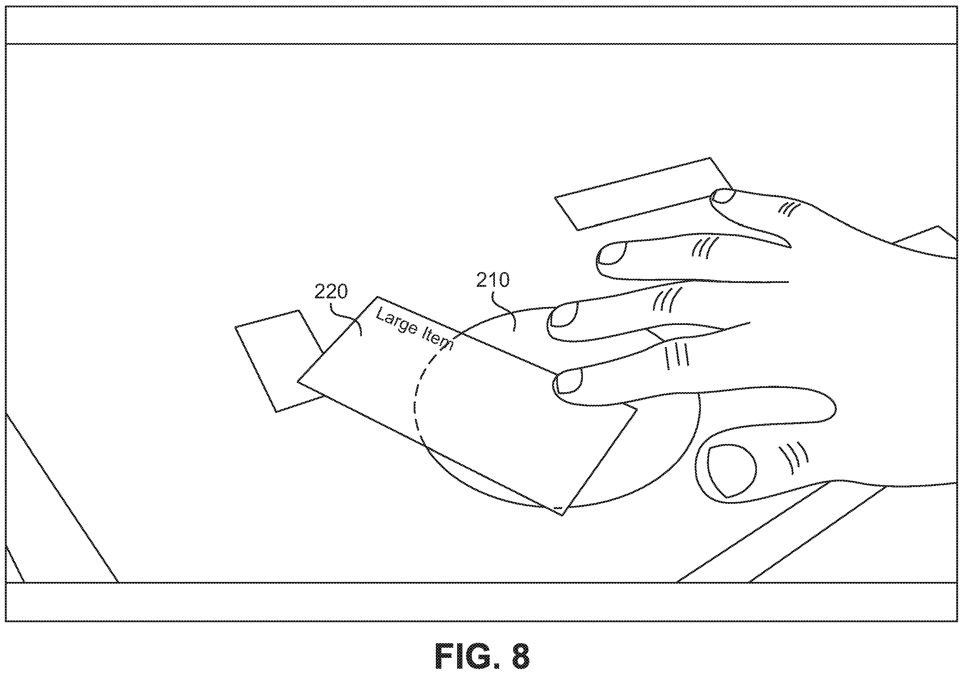

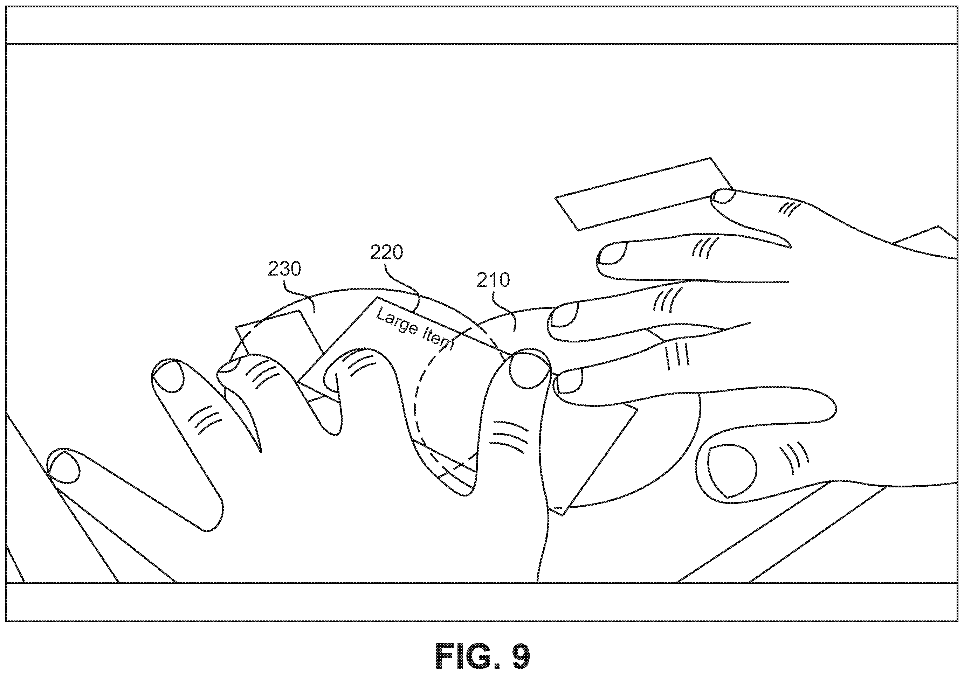

In some implementations the touch state can be entered from the audio preview state by placing the second finger or stylus anywhere on the screen or, alternatively, on a predefined portion of the screen. In other implementations the user makes contact with the screen in close proximity with the first finger or stylus. For instance, in some cases the second finger or stylus makes contact within a predefined distance from the first finger or stylus. One such example is shown in FIG. 8. In this example, a circle 210 is presented on the touch screen centered about the location where the first finger or stylus makes contact with the screen in order to enter the touch state. The finger is contacting a rectangle 220 labeled "Large Item." Upon touching the rectangle 220 the audio cue "Large Item" is presented to the user. In order to enter the touch state, the user uses a second finger or stylus to make contact with the screen within the circle 210 that is displayed. FIG. 9 shows this input device in the touch state. The second finger gives rise to circle 230, which as shown overlaps circle 210.

FIG. 10 is an illustrative architecture 400 that shows the functional components that may be installed on a computing device that employs a touch screen for receiving user inputs. The functional components are alternatively implementable using software, hardware, firmware, or various combinations of software, hardware, and firmware. For example, the functional components in the illustrative architecture 404 may be created during runtime through execution of instructions stored in a memory by a processor.

A host application 407 is typically utilized to provide a particular desired functionality. However, in some cases, the features and functions implemented by the host applications 407 can alternatively be provided by the device's operating system or middleware. For example, file system operations and input through a touch screen may be supported as basic operating system functions in some implementations.

An audio preview component 420 is configured to expose a variety of input events to the host application 407 and functions as an intermediary between the host application and the hardware-specific input controllers. These controllers include a touch screen controller 425, an audio controller 430 and possibly other input controllers 428 (e.g., a keyboard controller), which may typically be implemented as device drivers in software. Touch screen controller 425 interacts with the touch screen, which is abstracted in a single hardware layer 440 in FIG. 11. Among other functions, the touch screen controller 425 is configured to capture data indicative of touch coordinates and/or pressure being applied to the touch screen and sending the captured data back to the audio preview component 420, typically in the form of input events.

Thus, the audio preview component 420 is arranged to receive input events such as physical coordinates from the touch screen controller 425. The nature of the input events determines the state of the touch screen. That is, the manner in which the user contacts the screen with one or two fingers or styluses determines if the screen is in the out-of-range, audio preview or touch state. In the preview state, the audio preview component 420 then formulates the appropriate calls to the host application in order to obtain information concerning the functionality performed by the graphical user interface element that is being touched or contacted. For instance, if the host application 407 allows programmatic access, the audio preview component 420 can extract data in the host application 407 that identifies the graphical user interface element that the user has selected in either the audio preview state or the touch state. If the audio preview component 420 cannot programmatically access the contents of the host application 407, the host program may need to be written to incorporate appropriate APIs that can expose the necessary information to the audio preview component 420. The extracted data, typically in form of text, can undergo text-to-speech conversion using a text-to-speech converter or module accessed by the audio preview component 420. Alternatively, the extracted data may be used to generate audio data that is indicative of the function performed by activation of the graphical user interface element that is being touched or contacted. For instance, in some cases a distinct tone may be used to represent commonly used graphical user interface elements such as "save," "close," and the like. The audio preview component 420 can then expose the audio data to audio controller 434, which can send a drive signal to an audio generator in hardware layer 440 so that the audio can be rendered.

As used in this application, the terms "component" and "system" and the like are intended to refer to a computer-related entity, either hardware, a combination of hardware and software, software, or software in execution. For example, a component may be, but is not limited to being, a process running on a processor, a processor, an object, an instance, an executable, a thread of execution, a program, and/or a computer. By way of illustration, both an application running on a computer and the computer can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a machine-readable computer program accessible from any computer-readable device or storage media. For example, computer readable storage media can include but are not limited to magnetic storage devices (e.g., hard disk, floppy disk, magnetic strips ...), optical disks (e.g., compact disk (CD), digital versatile disk (DVD) ...), smart cards, and flash memory devices (e.g., card, stick, key drive ...). Of course, those skilled in the art will recognize that many modifications may be made to this configuration without departing from the scope or spirit of the claimed subject matter.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims, the scope of the present invention being defined only by such claims.

## Claims

1. A method of providing a user interface for a mobile device (105), comprising:
displaying one or more graphical user interface elements on a touch-screen;
receiving a first touch on the touch-screen;
entering, in response to receipt of the first touch and while continuing to receive the first touch, a first state that enables an audio cue that indicates a function that can be performed by the graphical user interface element;
receiving, while in the first state, an indication that the first touch is at the location of the graphical user interface element;
based at least on the indication that the first touch is at the location of the graphical user interface element, providing the audio cue that indicates the information associated with the graphical user interface element;
receiving, while in the first state, a second touch on the touch-screen while continuing to receive the first touch; and
entering, in response to receipt of the second touch, a second state that includes activating the associated graphical user interface element, wherein
the second state allows the graphical user interface element to be dragged on the touch screen (110) in response to movement of the first touch along the touch screen while in the second state.

2. The method of claim 1 wherein the second state is only entered if the second touch is received on a predefined portion of the touch-screen.

3. The method of claim 1 wherein the second state is only entered if the second touch is received on a portion of the touch screen reference signs placed is less than a predefined distance away from the location at which the first touch is received.

4. The method of claim 1 wherein the graphical user interface element represents a portion of a user interface to an application that is executed on an electronic device (105) and the function performed by the graphical user interface element causes the application to respond in a predefined manner.

5. The method of claim 5 wherein entering the first state does not cause the application to respond in accordance with the function performed graphical user interface element.

6. The method of claim 1 further comprising:
detecting an absence of the second touch; and
in response to the absence of the second touch, returning to the first state.

7. A touch screen (110) display system for use in an electronic device (105), comprising:
a touch screen (110) configured to receive user input and display one or more graphical user interface elements;
an audio preview component (420) configured to enter, in response to receipt of a first touch and continued receipt of the first touch on the touch screen (110), a first state that enables an audio cue indicating a function that can be performed by the graphical user interface element,
receive, while in the first state, an indication that the first touch is at the location of the graphical user interface element, and
based at least on the indication that the first touch is at the location of the graphical user interface element, provide the audio cue that indicates the information associated with the graphical user interface element;
a touch screen controller (425) configured to enter, in response to receipt of a second touch on the touch screen while continuing to receive the first touch, a second state that includes activating the associated graphical user interface element; and
an application residing on the electronic device (105), the application having a user interface that includes the graphical user interface element, and wherein the audio preview component (420) includes a text-to-speech converter component for converting text associated with the graphical user interface element into the audio cue, said text being exposed to the audio preview component by the application, wherein
the second state allows the graphical user interface element to be dragged on the touch screen in response to movement of the first touch along the touch screen.

8. The touch screen (110) display system of claim 7 wherein the second state is only entered if the second touch is received on a predefined portion of the touch-screen.

9. The touch screen (110) display system of claim 7 wherein the second state is only entered if the second touch is received on a portion of the touch screen that is less than a predefined distance away from the location at which the first touch is received.

10. The touch screen (110) display system of claim 8 further comprising an application residing on the electronic device (105), the application having a user interface that includes the graphical user interface element, wherein a function performed by the graphical user interface element causes the application to respond in a predefined manner.

## Patentansprüche

1. Verfahren zum Bereitstellen einer Benutzeroberfläche für eine Mobilfunkvorrichtung (105), wobei das Verfahren umfasst:
Anzeigen eines oder mehrerer grafischer Benutzeroberflächenelemente auf einem Touchscreen;
Empfangen einer ersten Berührung auf dem Touchscreen;
Eintreten, als Reaktion auf das Empfangen der ersten Berührung und auf das fortgesetzte Empfangen der ersten Berührung, in einen ersten Zustand, der einen akustischen Hinweis aktiviert, der eine Funktion anzeigt, die von dem grafischen Benutzeroberflächenelement ausgeführt werden kann;
Empfangen, in dem ersten Zustand, einer Anzeige, dass die erste Berührung an dem Ort des grafischen Benutzeroberflächenelements stattfindet;
aufgrund mindestens der Anzeige, dass die erste Berührung an dem Ort des grafischen Benutzeroberflächenelements stattfindet, Bereitstellen des akustischen Hinweises, der die Informationen anzeigt, die dem grafischen Benutzeroberflächenelement zugeordnet sind;
Empfangen, in dem ersten Zustand während des fortgesetzten Empfangens der ersten Berührung, einer zweiten Berührung auf dem Touchscreen; und
Eintreten, als Reaktion auf das Empfangen der zweiten Berührung, in einen zweiten Zustand, der ein Aktivieren des zugeordneten grafischen Benutzeroberflächenelements beinhaltet, wobei der zweite Zustand dem grafischen Benutzeroberflächenelement erlaubt, in dem zweiten Zustand, als Reaktion auf ein Bewegen der ersten Berührung entlang dem Touchscreen, auf dem Touchscreen (110) gezogen zu werden.

2. Verfahren nach Anspruch 1, wobei in den zweiten Zustand nur eingetreten wird, wenn die zweite Berührung auf einem vordefinierten Abschnitt des Touchscreens empfangen wird.

3. Verfahren nach Anspruch 1, wobei in den zweiten Zustand nur eingetreten wird, wenn die zweite Berührung auf einem Abschnitt des Touchscreens empfangen wird, in dem Bezugszeichen in einem Geringeren als einem vordefinierte Abstand von dem Ort angebracht sind, an dem die erste Berührung des grafischen Benutzeroberflächenelements empfangen wird.

4. Verfahren nach Anspruch 1, wobei das grafische Benutzeroberflächenelement einen Abschnitt einer Benutzeroberfläche für eine Anwendung darstellt, die in einer elektronischen Vorrichtung (105) ausgeführt wird, und wobei die durch das grafische Benutzeroberflächenelement ausgeführte Funktion, die Anwendung veranlasst in einer vordefinierten Weise zu antworten.

5. Verfahren nach Anspruch 5, wobei das Eintreten in den ersten Zustand die Anwendung nicht veranlasst, gemäß der durch das grafische Benutzeroberflächenelement ausgeführten Funktion zu antworten.

6. Verfahren nach Anspruch 1, das außerdem umfasst:
Erkennen einer Abwesenheit der zweiten Berührung; und
als Reaktion auf die Abwesenheit der zweiten Berührung, Zurückkehren in den ersten Zustand.

7. Anzeigesystem eines Touchscreens (110) zur Verwendung in einer elektronischen Vorrichtung (105), umfassend:
einen Touchscreen (110), der konfiguriert ist zum Empfangen einer Benutzereingabe und zum Anzeigen eines oder mehrerer grafischer Benutzeroberflächenelemente;
eine akustische Vorschaukomponente (420), die konfiguriert ist zum: Eintreten, als Reaktion auf das Empfangen einer ersten Berührung und auf das fortgesetzte Empfangen der ersten Berührung auf dem Touchscreen (110), in einen ersten Zustand, der einen akustischen Hinweis aktiviert, der eine Funktion anzeigt, die von dem grafischen Benutzeroberflächenelement ausgeführt werden kann,
Empfangen, in dem ersten Zustand, einer Anzeige, dass die erste Berührung an dem Ort des grafischen Benutzeroberflächenelements stattfindet, und
aufgrund mindestens der Anzeige, dass die erste Berührung an dem Ort des grafischen Benutzeroberflächenelements stattfindet, Bereitstellen des akustischen Hinweises, der die Informationen anzeigt, die dem grafischen Benutzeroberflächenelement zugeordnet sind;
eine Touchscreensteuereinheit (425), die konfiguriert ist zum Eintreten, als Reaktion auf das Empfangen einer zweiten Berührung, während des fortgesetzten Empfangens der ersten Berührung, in einen zweiten Zustand, der ein Aktivieren des zugeordneten grafischen Benutzeroberflächenelements beinhaltet; und
eine Anwendung, die in der elektronischen Vorrichtung (105) abgelegt ist, wobei die Anwendung eine Benutzeroberfläche aufweist, die das grafische Benutzeroberflächenelement beinhaltet, und wobei die akustische Vorschaukomponente (420) eine Text-zu-Sprache-Wandlerkomponente beinhaltet, um einen Text, der dem grafischen Benutzeroberflächenelement zugeordnet ist, in den akustischen Hinweis umzuwandeln, wobei der Text durch die Anwendung für die akustische Vorschaukomponente offengelegt wird, wobei der zweite Zustand dem grafischen Benutzeroberflächenelement erlaubt, als Reaktion auf ein Bewegen der ersten Berührung entlang dem Touchscreen, auf dem Touchscreen gezogen zu werden.

8. Anzeigesystem eines Touchscreens (110) nach Anspruch 7, wobei in den zweiten Zustand nur eingetreten wird, wenn die zweite Berührung auf einem vordefinierten Abschnitt des Touchscreens empfangen wird.

9. Anzeigesystem eines Touchscreens (110) nach Anspruch 7, wobei in den zweiten Zustand nur eingetreten wird, wenn die zweite Berührung auf einem Abschnitt des Touchscreens empfangen wird, der sich in einem Geringeren als einem vordefinierte Abstand von dem Ort befindet, an dem die erste Berührung des grafischen Benutzeroberflächenelements empfangen wird.

10. Anzeigesystem eines Touchscreens (110) nach Anspruch 8, das außerdem eine Anwendung umfasst, die in der elektronischen Vorrichtung (105) abgelegt ist, wobei die Anwendung eine Benutzeroberfläche aufweist, die das grafische Benutzeroberflächenelement beinhaltet, wobei eine durch das grafische Benutzeroberflächenelement ausgeführte Funktion, die Anwendung veranlasst in einer vordefinierten Weise zu antworten.

## Revendications

1. Procédé de fourniture d'une interface utilisateur pour un appareil mobile (105), comprenant :
l'affichage d'un ou plusieurs éléments d'interface utilisateur graphique sur un écran tactile ;
la réception d'un premier toucher sur l'écran tactile ;
le fait d'entrer, en réponse à la réception du premier toucher et tout en continuant à recevoir le premier toucher, dans un premier état qui active un signal audio qui indique une fonction qui peut être réalisée par l'élément d'interface utilisateur graphique ;
la réception, tout en étant dans le premier état, d'une indication que le premier toucher est au niveau de l'emplacement de l'élément d'interface utilisateur graphique ;
sur la base au moins de l'indication que le premier toucher est au niveau de l'emplacement de l'élément d'interface utilisateur graphique, la fourniture du signal audio qui indique les informations associées à l'élément d'interface utilisateur graphique ;
la réception, tout en étant dans le premier état, d'un deuxième toucher sur l'écran tactile tout en continuant de recevoir le premier toucher ; et
le fait d'entrer, en réponse à la réception du deuxième toucher, dans un deuxième état qui comprend l'activation de l'élément d'interface utilisateur graphique associé,
le deuxième état permettant à l'élément d'interface utilisateur graphique d'être glissé sur l'écran tactile (110) en réponse au mouvement du premier toucher le long de l'écran tactile pendant qu'il est dans le deuxième état.

2. Procédé selon la revendication 1, le deuxième état étant entré seulement si le deuxième toucher est reçu sur une partie prédéfinie de l'écran tactile.

3. Procédé selon la revendication 1, le deuxième état étant entré seulement si le deuxième toucher est reçu sur une partie de l'écran tactile, des signes de référence placés étant à une distance inférieure à une distance prédéfinie de l'emplacement au niveau duquel le premier toucher est reçu.

4. Procédé selon la revendication 1, l'élément d'interface utilisateur graphique représentant une partie d'une interface utilisateur pour une application qui est exécutée sur un dispositif électronique (105) et la fonction réalisée par l'élément d'interface utilisateur graphique amenant l'application à répondre d'une manière prédéfinie.

5. Procédé selon la revendication 5, l'entrée dans le premier état n'amenant pas l'application à répondre conformément à la fonction réalisée par l'élément d'interface utilisateur graphique.

6. Procédé selon la revendication 1 comprenant en outre :
la détection d'une absence du deuxième toucher ; et
en réponse à l'absence du deuxième toucher, le retour au premier état.

7. Système d'affichage à écran tactile (110) destiné à être utilisé dans un dispositif électronique (105), comprenant :
un écran tactile (110) configuré pour recevoir des entrées utilisateur et afficher un ou plusieurs éléments d'interface utilisateur graphique ;
un composant de prévisualisation audio (420) configuré pour entrer, en réponse à la réception d'un premier toucher et à la réception continue du premier toucher sur l'écran tactile (110), dans un premier état qui active un signal audio indiquant une fonction qui peut être réalisée par l'élément d'interface utilisateur graphique,
recevoir, pendant qu'il est dans le premier état, une indication que le premier toucher est au niveau de l'emplacement de l'élément d'interface utilisateur graphique, et
sur la base au moins de l'indication que le premier toucher est au niveau de l'emplacement de l'élément d'interface utilisateur graphique, fournir le signal audio qui indique les informations associées à l'élément d'interface utilisateur graphique ;
un dispositif de commande d'écran tactile (425) configuré pour entrer, en réponse à la réception d'un deuxième toucher sur l'écran tactile tout en continuant à recevoir le premier toucher, dans un deuxième état qui comprend l'activation de l'élément d'interface utilisateur graphique associé ; et
une application résidant sur le dispositif électronique (105), l'application ayant une interface utilisateur qui comprend l'élément d'interface utilisateur graphique, et le composant de prévisualisation audio (420) comprenant un composant de conversion texte-parole pour convertir le texte associé à l'élément d'interface utilisateur graphique dans le signal audio, ledit texte étant exposé au composant de prévisualisation audio par l'application,
le deuxième état permettant de faire glisser l'élément d'interface utilisateur graphique sur l'écran tactile en réponse au mouvement du premier toucher le long de l'écran tactile.

8. Système d'affichage à écran tactile (110) selon la revendication 7, l'entrée dans le deuxième état s'effectuant seulement si le deuxième toucher est reçu sur une partie prédéfinie de l'écran tactile.

9. Système d'affichage à écran tactile (110) selon la revendication 7, l'entrée dans le deuxième état s'effectuant seulement si le deuxième toucher est reçu sur une partie de l'écran tactile qui est à une distance inférieure à une distance prédéfinie de l'emplacement au niveau duquel le premier toucher est reçu.

10. Système d'affichage à écran tactile (110) selon la revendication 8, comprenant en outre une application résidant sur le dispositif électronique (105), l'application ayant une interface utilisateur qui comprend l'élément d'interface utilisateur graphique, une fonction réalisée par l'élément d'interface utilisateur graphique amenant l'application à répondre d'une manière prédéfinie.
